(19) **Europäisches Patentamt**

**European Patent Office**

**Office européen des brevets**

(11) **EP 1 277 080 B1**

(12) **EUROPÄISCHE PATENTSCHRIFT**

(45) Veröffentlichungstag und Bekanntmachung des Hinweises auf die Patenterteilung:
**18.01.2006 Patentblatt 2006/03**

(51) Int Cl.:
*G02C 7/02* *(2006.01)*

(21) Anmeldenummer: **01942976.0**

(22) Anmeldetag: **30.04.2001**

(86) Internationale Anmeldenummer:
**PCT/DE2001/001596**

(87) Internationale Veröffentlichungsnummer:
**WO 2001/084215 (08.11.2001 Gazette 2001/45)**

(54) **VERFAHREN ZUR HERSTELLUNG EINER BRILLE**

METHOD FOR PRODUCING EYEGLASSES

PROCEDE DE FABRICATION DE LUNETTES

(84) Benannte Vertragsstaaten:
**AT BE CH CY DE DK ES FI FR GB GR IE IT LI LU MC NL PT SE TR**

(30) Priorität: **28.04.2000 DE 10020576**
**28.04.2000 DE 10021047**
**17.01.2001 WOPCT/DE01/00188**

(43) Veröffentlichungstag der Anmeldung:
**22.01.2003 Patentblatt 2003/04**

(73) Patentinhaber: **Rodenstock GmbH**
**80469 München (DE)**

(72) Erfinder:
• **ZIMMERMANN, Martin**
**85253 Kleinberghofen (DE)**
• **BAUMBACH, Peter**
**81543 München (DE)**
• **HAIMERL, Walter**
**80337 München (DE)**
• **PFEIFFER, Herbert**
**81247 München (DE)**

• **ESSER, Gregor**
**81735 München (DE)**
• **BROSIG, Jochen**
**82031 Grünwald (DE)**
• **MÜLLER, Werner**
**75443 Ötisheim (DE)**
• **WECHS, Martin**
**81373 München (DE)**
• **ALTHEIMER, Helmut**
**87650 Lauchdorf (DE)**
• **DORSCH, Rainer**
**81477 München (DE)**
• **NIKOLAUS, Winfried**
**85540 Haar (DE)**

(74) Vertreter: **Müller-Boré & Partner**
**Patentanwälte**
**Grafinger Strasse 2**
**81671 München (DE)**

(56) Entgegenhaltungen:
**EP-A- 0 880 046          DE-A- 19 701 312**
**US-A- 5 444 503          US-A- 5 992 998**

EP 1 277 080 B1

## Beschreibung

### Technisches Gebiet

Die Erfindung bezieht sich auf ein Verfahren zur Herstellung einer Brille, die individuelle progressive Brillengläser aufweist.

### Stand der Technik

In einer Reihe von Druckschriften - exemplarisch wird hierzu auf die DE-A-43 37 369, die DOZ 8/96, Seite 44 bis 46, die NOJ 11/97, Seite 18 ff. oder die DE-A-197 01 312 verwiesen - ist vorgeschlagen worden, individuelle progressive Brillengläser zu berechnen und herzustellen. Hiermit ist gemeint, daß die progressive Fläche und/oder eine asphärische Anpassfläche entsprechend den jeweiligen Rezeptdaten und sonstigen Eigenschaften, wie beispielsweise Vorneigung, Hornhaut/Scheitel-Abstand etc. individuell berechnet wird.

Eine Anpassung des progressiven Brillenglases an die Fassung bzw. die Fassungsform ist in diesen Druckschriften nicht in Betracht gezogen.

Zwar ist es bekannt, die kritische Dicke von Brillengläsern - d.h. die Mittendicke bei Gläsern mit positiver Wirkung bzw. die Randdicke bei Gläsern mit negativer Wirkung - durch eine entsprechende Wahl der Lage der Rezeptfläche zu minimieren, bei der Minimierung der kritischen Dicke wird jedoch ausschließlich die Lage der beiden Flächen zueinander, nicht jedoch die Form der Rezept- bzw. Anpaßfläche optimiert.

### Darstellung der Erfindung

Der Erfindung liegt die Aufgabe zugrunde, ein Verfahren zur Herstellung einer Brille anzugeben, die individuelle Brillengläser aufweist, die auf die jeweils ausgewählte Brillenfassung abgestimmt sind.

Eine erfindungsgemäße Lösung dieser Aufgabe ist im Patentanspruch 1 angegeben. Weiterbildungen der Erfindung sind Gegenstand der abhängigen Ansprüche.

Das erfindungsgemäße Verfahren zur Herstellung einer Brille mit individuellen, an die Fassungsform angepassten progressiven Brillengläsern umfaßt folgende Schritte:

Zunächst muß der Brillenträger eine ihm zusagende Brillenfassung auswählen. Die Form der Gläserringe dieser Brillenfassung wird mit einer Genauigkeit in x- und y-Richtung, d.h. in Richtung der Fassungsebene von besser als.+/- 0,5 mm erfaßt (Datensatz 1). Die Generierung dieses Datensatzes kann entweder dadurch erfolgen, daß die Brillenfassung mit einem sogenannten Tracer berührend abgetastet wird, oder daß die Form der Brillenfassung mit einem Scanner bzw. einem optischen Erfassungsgerät berührungslos erfaßt wird. Selbstverständlich ist es aber auch möglich, die Form der Gläserringe beim Hersteller der jeweiligen Brillenfassung abzurufen und die Herstellerdaten in das erfindungsgemäße Verfahren mit ein zu beziehen. Alternativ kann auch die Kontur der Formscheiben erfaßt werden.

Weiterhin werden die Durchstoßpunkte der Sehstrahlen durch die Ebene der Gläserringe für wenigstens zwei Auslege-Entfernungen der progressiven Brillengläser mit einer Genauigkeit von besser als +/- 1 mm erfaßt (Datensatz 2).

Bei einem für normale Anwendungen ausgelegten progressiven Brillenglas sind die Auslege-Entfernungen einmal "unendlich" und einmal eine Nahentfernung, wie beispielsweise 33 cm. Bei einem für eine spezielle Anwendung angepaßtem progressiven Brillenglas können selbstverständlich andere Auslege-Entfernungen vorliegen, beispielsweise wären bei einer für die Bildschirmarbeit angepaßten Brille die Auslege-Entfernungen einmal ca. 1 m und einmal ca. 40 cm.

Die Erfassung der Durchstoßpunkte für die jeweiligen Auslege-Entfernungen ist aus dem Stand der Technik bekannt, so daß an dieser Stelle nicht näher darauf eingegangen werden muß.

Diese beiden Verfahrensschritte sind aus dem Stand der Technik bekannt und werden von einem Augenoptiker bei der Anpassung einer Brille mit progressiven Brillengläsern routinemäßig ausgeführt.

Im Gegensatz zu dem bisherigen Verfahren erfolgt die Auswahl und die Positionierung in Bezug auf die Gläserringe einer sphärischen oder asphärischen Fläche nicht nur im Hinblick auf die Rezeptdaten, sondern auch unter Verwendung der Datensätze 1 und 2, d.h. unter Berücksichtigung der Form der Gläserringe und der Durchstoßpunkte der Sehstrahlen durch die Ebene der Gläserringe. Anders ausgedrückt, werden aus beispielsweise lagermäßig vorgehaltenen "Blanks", d.h. einseitig fertigen Brillengläsern der Blank ausgewählt, der sich nicht nur im Hinblick auf die Rezeptdaten, sondern auch im Hinblick auf die Form der Gläserringe und die Lage der Durchstoßpunkte am besten für das individuell berechnete progressive Brillenglas eignet.

Im Anschluß hieran wird eine progressive Fläche unter Minimierung der kritischen Dicke des Brillenglases und unter Verwendung der Datensätze 1 bis 3 berechnet. Die Berechnung, d.h. die Optimierung der progressiven Fläche ausgehend von einer Ausgangsfläche kann dabei mit herkömmlichen Methoden erfolgen, so daß hierauf an dieser Stelle nicht näher eingegangen werden muß.

Anschließend erfolgt dann die Fertigung der progressiven Fläche sowie die Randung des Brillenglases aus einem einseitig fertigen, nicht gerandeten Halbprodukt unter Verwendung der generierten Datensätze.

Dabei ist es von besonderem Vorteil, wenn die einseitig fertige Fläche eine sphärische oder asphärische Vorderfläche ist, da sich diese Fläche - anders als die progressive Fläche - besser an den Verlauf der Brillenfassung insbesondere in z-Richtung, d.h. senkrecht zur Fassungsebene anpassen läßt.

Aus diesem Grunde ist es besonders bevorzugt, wenn auch die Form der Gläserringe in z-Richtung insbesondere mit einer Genauigkeit von besser als +/- 0,5 mm erfaßt wird. Die Form der Gläserringe wird dann in den Datensatz 1 mit eingegeben.

Eine weitere Steigerung der Qualität des Brillenglases erhält man dadurch, daß die Erfassung der Durchstoßpunkte der Sehstrahlen durch die Ebene der Gläserringe und die Anordnung der Gläserringe vor den Augen des Brillenträgers mit einer Genauigkeit in X-, Y- und Z-Richtung von besser als +/- 0,5 mm erfaßt wird.

Besonders bevorzugt ist es, wenn die Form der Vorderfläche und insbesondere der Verlauf in Abhängigkeit von der Form der Gläserringe ausgewählt wird. Hierzu kann die Vorderfläche eine asphärische Fläche und insbesondere eine Fläche sein, die zwei unterschiedlich gestaltete Hauptschnitte aufweist, deren Form als Funktion der Form der Gläserringe gewählt ist. Anders ausgedrückt wird erfindungsgemäß eine torische bzw. atorische Fläche auch dann verwendet, wenn die Rezeptdaten nicht die Verwendung eines Torus erfordern, um die Vorderfläche möglichst optimal an den Verlauf der Gläserringe anpassen zu können. Der durch die torisch bzw. atorisch gestaltete Oberfläche eingeführte und eigentlich unerwünschte Astigmatismus wird dann durch einen entsprechenden Flächenastigmatismus der augenseitigen progressiven Fläche kompensiert, so daß der Gesamtastigmatismus - unter Berücksichtigung des Astigmatismus schiefer Bündel in Gebrauchsstellung - den Rezeptwerten entspricht.

Bei der Berechnung der progressiven Gläser kann dabei insbesondere wie folgt vorgegangen werden:

Nach dem Stand der Technik verwenden die Brillenglashersteller für die Progressionslänge L von Gleitsichtgläsern einen produktabhängigen Standardwert von ca. 22 mm.

Speziell für Fassungen mit geringer Scheibenhöhe werden von manchen Herstellern zusätzlich kürzere Progressionslängen als der Standard angeboten.

Aus dem Stand der Technik ist kein Verfahren bekannt, daß die Progressionslänge eines Gleitsichtglases unter Berücksichtigung des Hornhautscheitelabstands (HSA) der vorangepaßten Fassung festlegt.

Eine Standard-Progressionslänge von 22 mm wirkt sich ungünstig aus, sobald der Hornhautscheitelabstand einen gewissen Mittelwert (15 mm) über- bzw. unterschreitet und somit das Brillenglas nicht mehr gemäß einer empirisch ermittelten Gebrauchsstellung vor dem Augendrehpunkt sitzt.

Entsprechend der empirisch ermittelten Gebrauchsstellung ist eine feste Progressionslänge von 22 mm nur bei einem mittleren HSA von 15 mm optimal. Bei kleinerem HSA muß der Blick weiter nach unten gesenkt werden, bei größerem HSA ist der Nahbezugspunkt schon bei geringerer Blickauslenkung erreicht.

Erfahrungswerten zufolge ergibt sich beim Lesen eine Blicksenkung gegenüber der horizontalen Blickauslenkung von ca. 32 Grad. Verändert sich der HSA entsprechend der Fassungswahl des Endgebrauchers gegenüber dem Standard-HSA, entspricht die Blickauslenkung, um die volle Addition zu erlangen, bzw. durch den Nahbezugspunkt $B_N$ zu blicken, nicht mehr der empirisch ermittelten Gebrauchsstellung. Dies kann eine für den Gleitsichtglasträger unangenehme Kopfhaltung bzw. Augenauslenkung erzwingen. Bei kleinerem HSA (z.B. 10 mm) muß der Kopf bzw. die Augen gesenkt werden (falls dies überhaupt möglich ist), bei größerem HSA (z.B. 20 mm) muß der Kopf bzw. die Augen unnatürlich angehoben werden.

Erfindungsgemäß wird deshalb ein Verfahren bereitgestellt, mit dem die optimale und individuelle Progressionslänge eines Gleitsichtglases anhand des gemessenen Hornhautscheitelabstands einer vorangepaßten Brillenfassung bestimmt werden kann.

Diese Aufgabe wird durch die folgenden Schritte gelöst:

a) Bereitstellen des Wertes des individuellen Hornhautscheitelabstands (HSA) einer vorangepaßten Brillenfassung

b) Messen des individuellen Abstands d zwischen einem Fernbezugspunkt $B_F$ und einem Zentrierkreuz $Z_K$

c) Ermitteln der optimalen und individuellen Progressionslänge ($L_{opt}$) gemäß der folgenden Formel:

$$L_{opt} = 0.63 * (HSA + 13.5\ mm) + d\ (B_F,\ Z_K).$$

Diese ermittelte Progressionslänge kann dem Glashersteller übermittelt werden, der dann ein Gleitsichtglas mit dieser individuellen Progressionslänge herstellt.

## Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1a - 4a     die Pfeilhöhen von vier Ausführungsbeispielen der Erfindung,

Fig. 1b - 4b     die Isolinien der astigmatischen Abweichung,

Fig. 1c - 4c     die Isolinien des mittleren Gebrauchswerts,

Fig. 1d - 4d     die Isolinien des Flächenastigmatismus,

Fig. 1e - 4e     die Isolinien der mittleren Flächenbrechkraft für erfindungsgemäße Brillengläser.

## Beschreibung von Ausführungsbeispielen

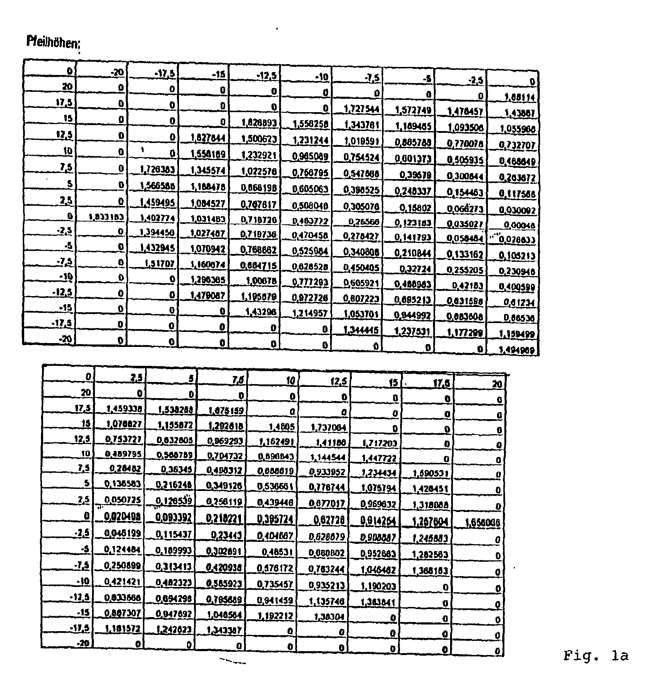

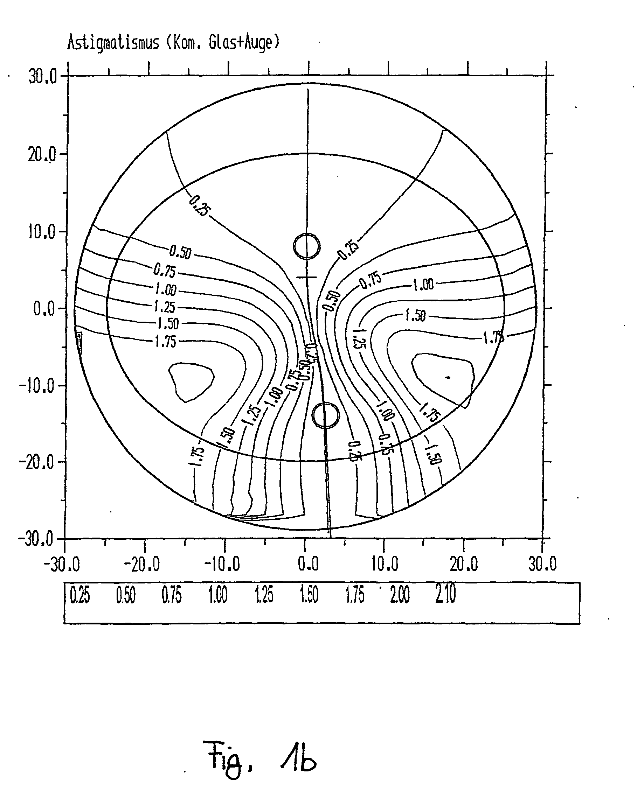

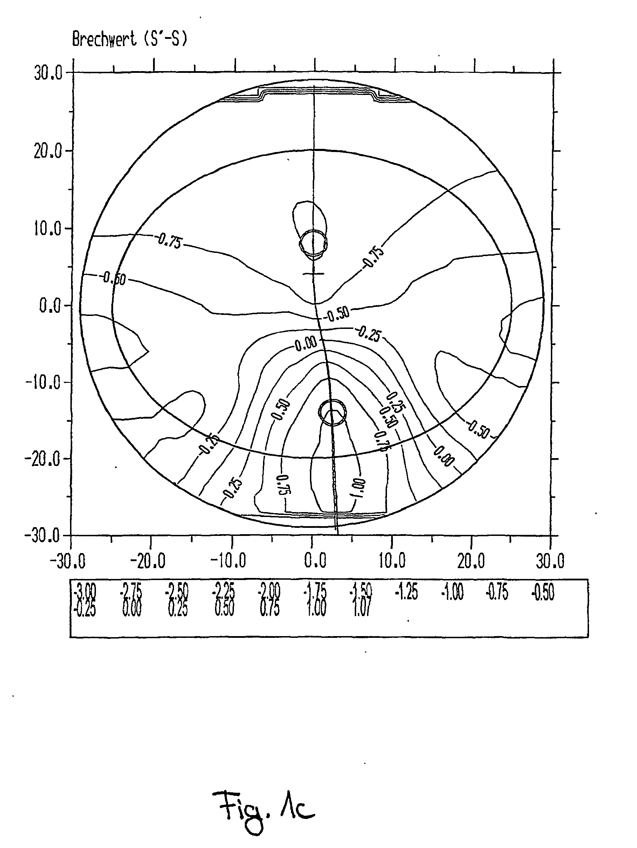

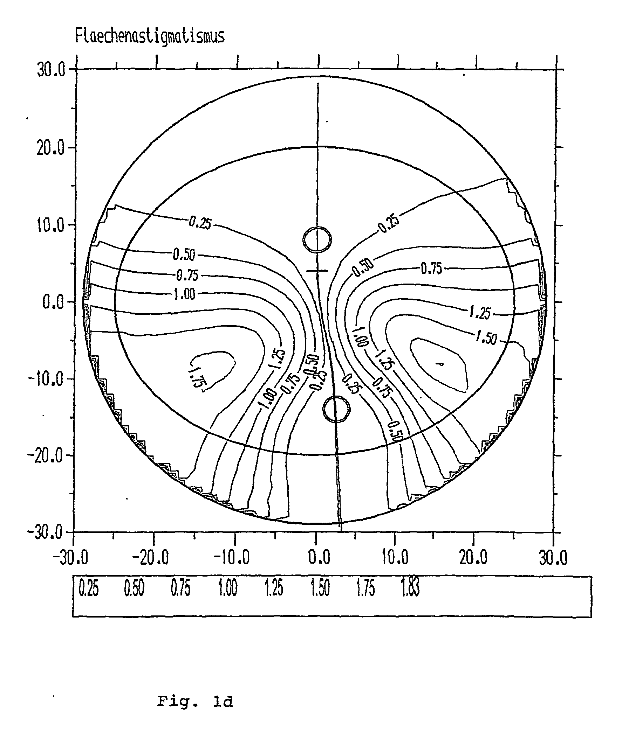

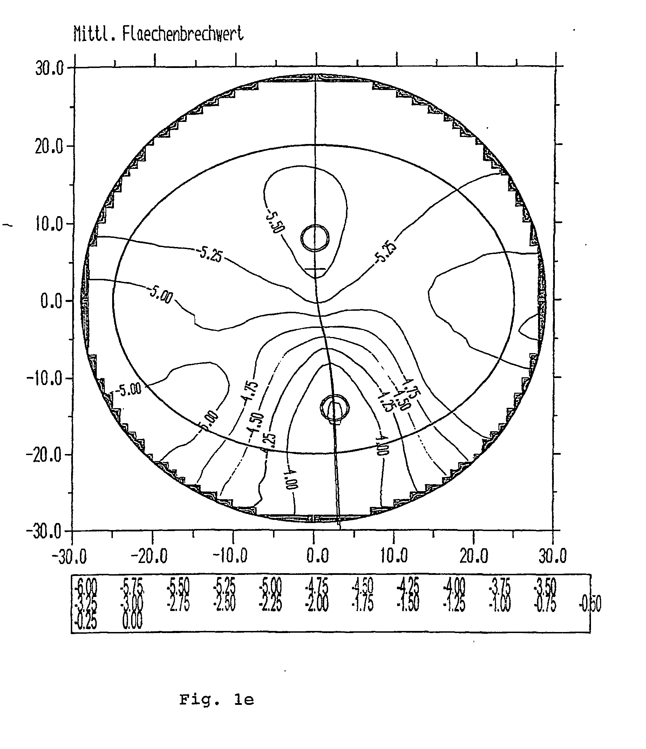

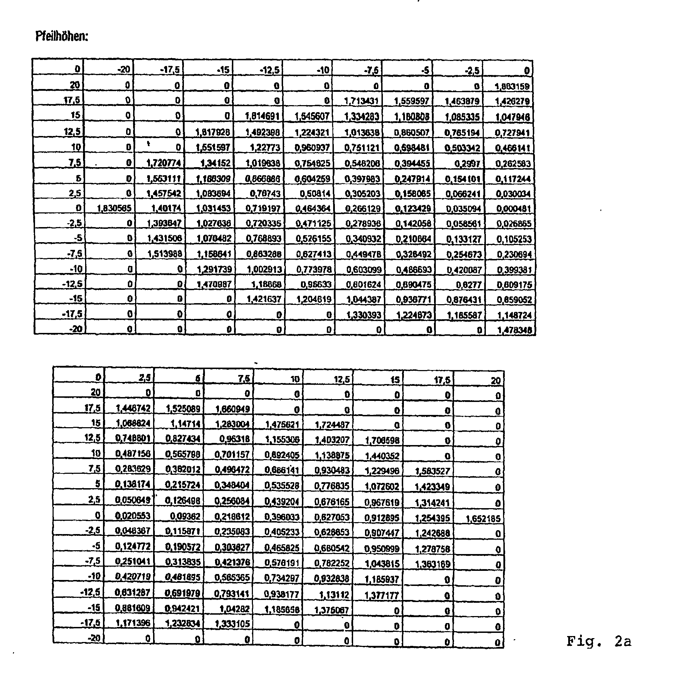

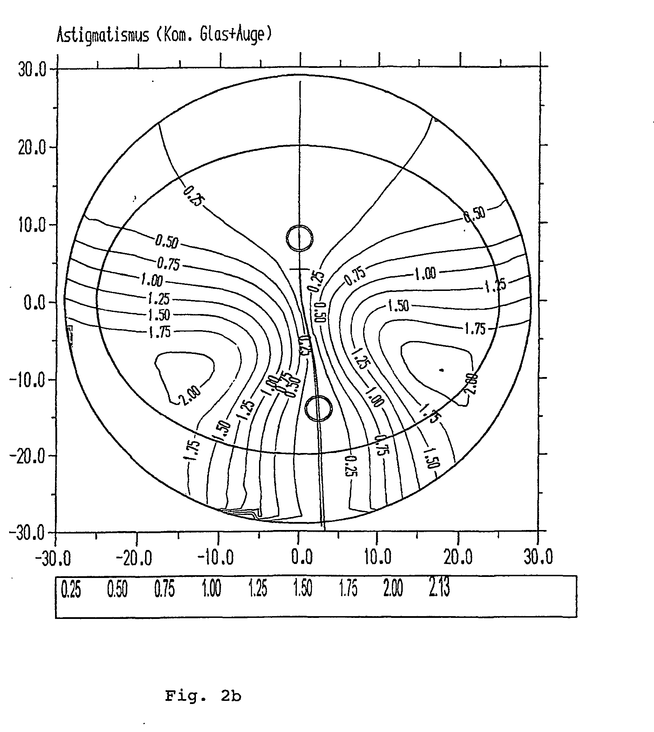

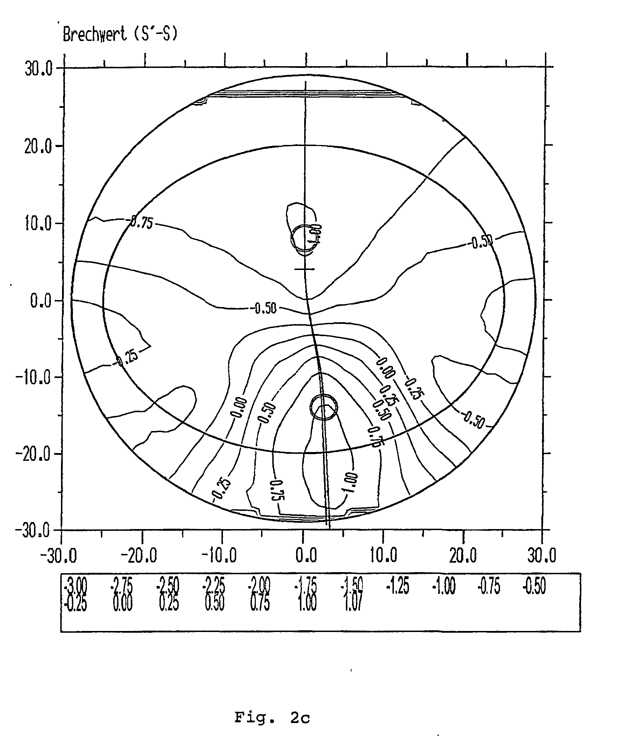

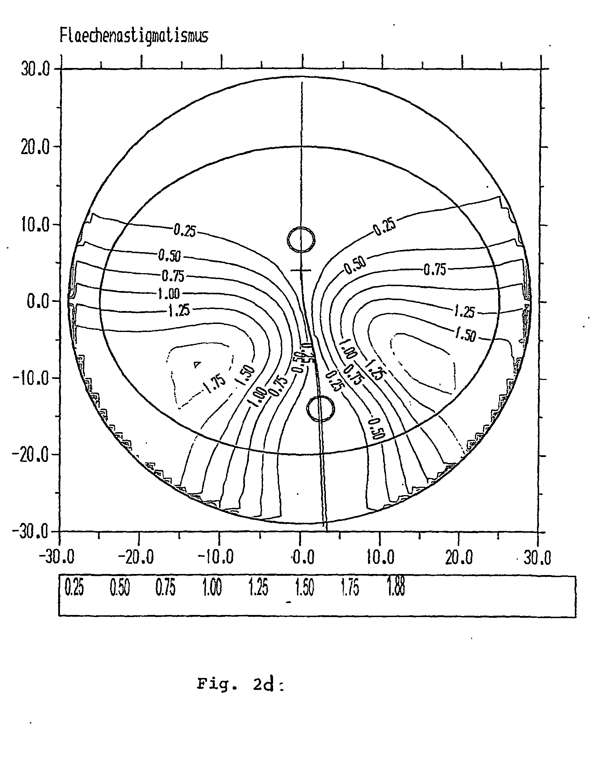

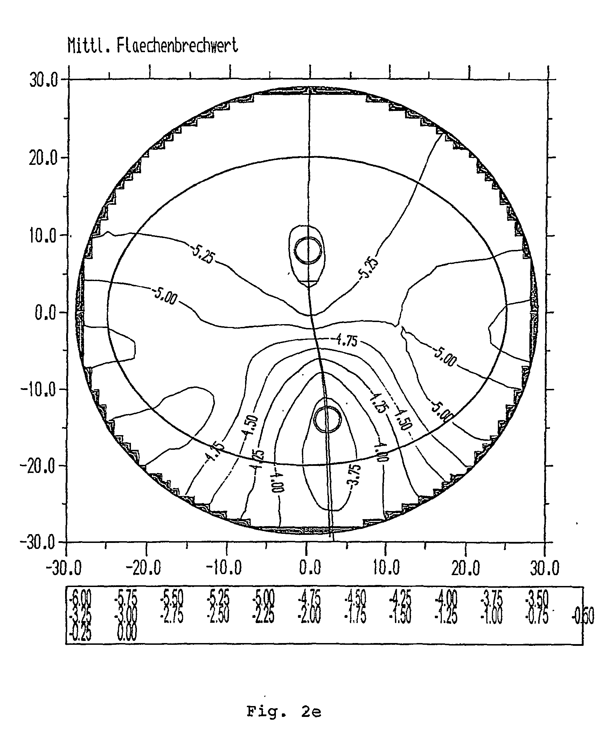

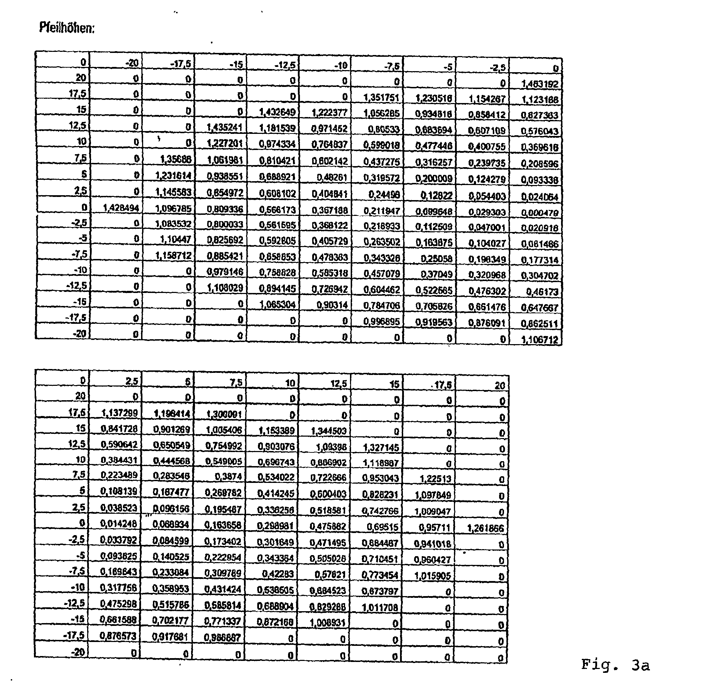

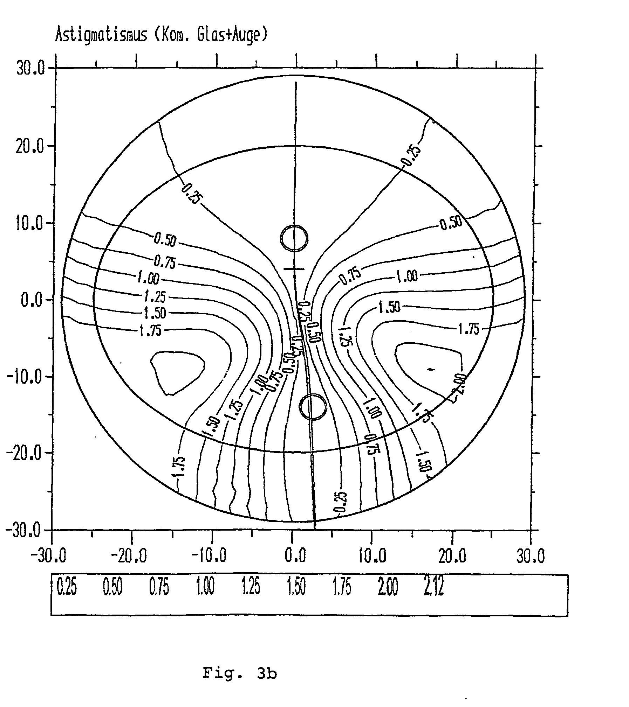

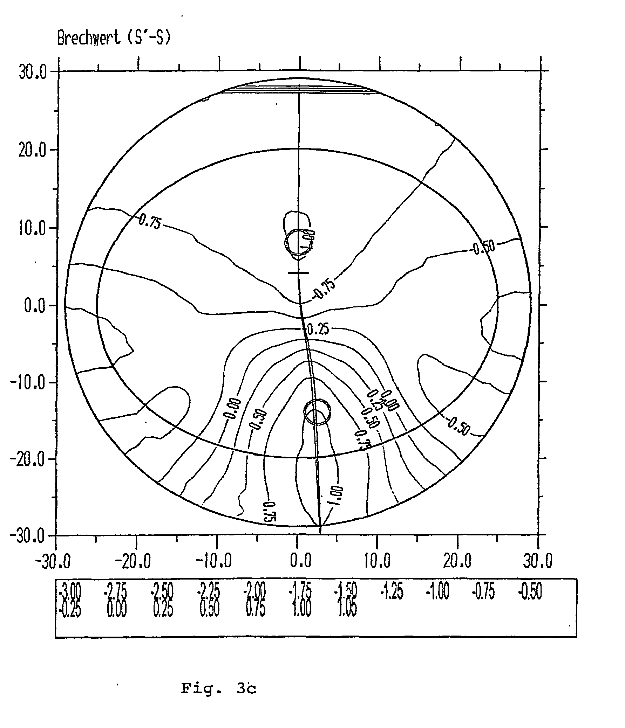

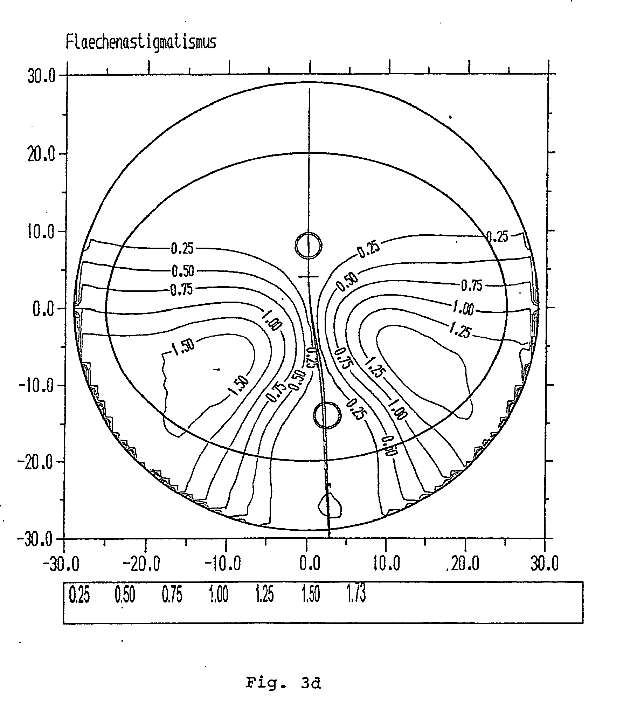

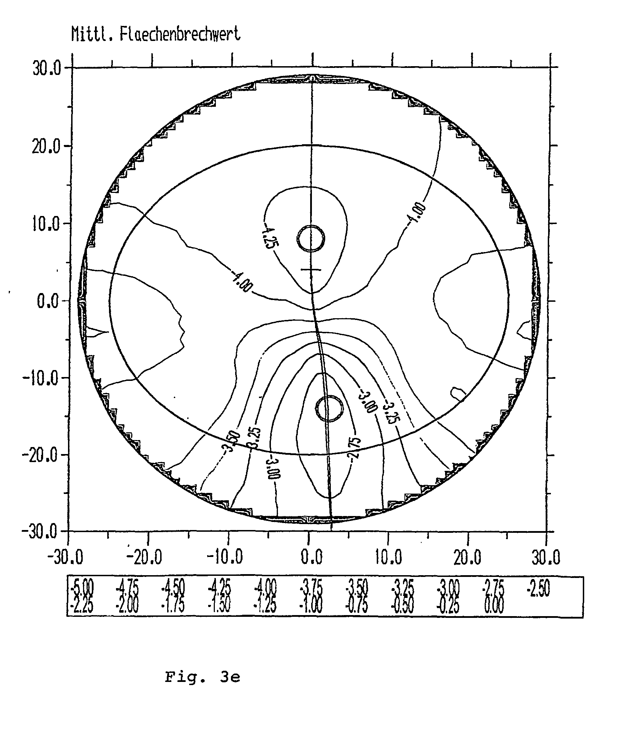

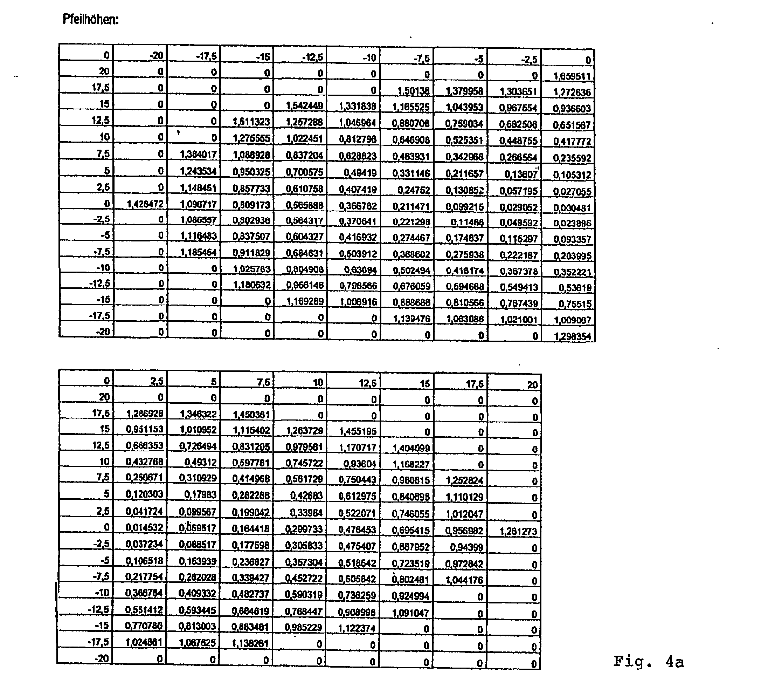

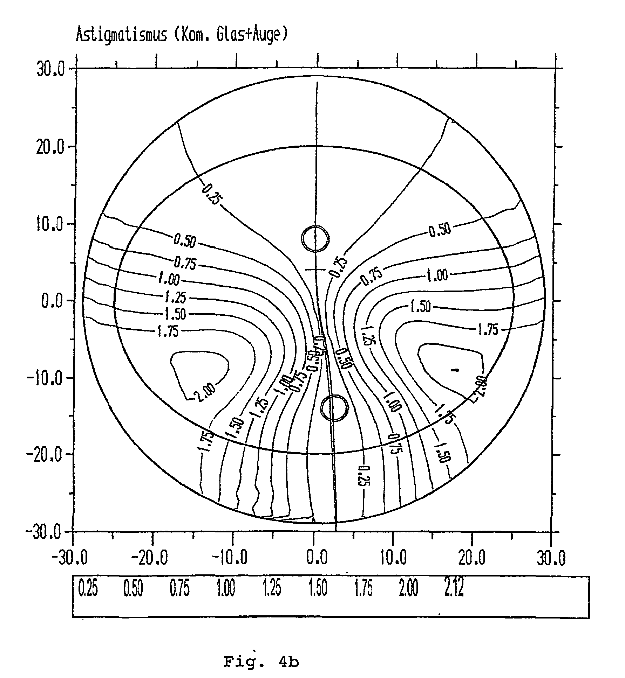

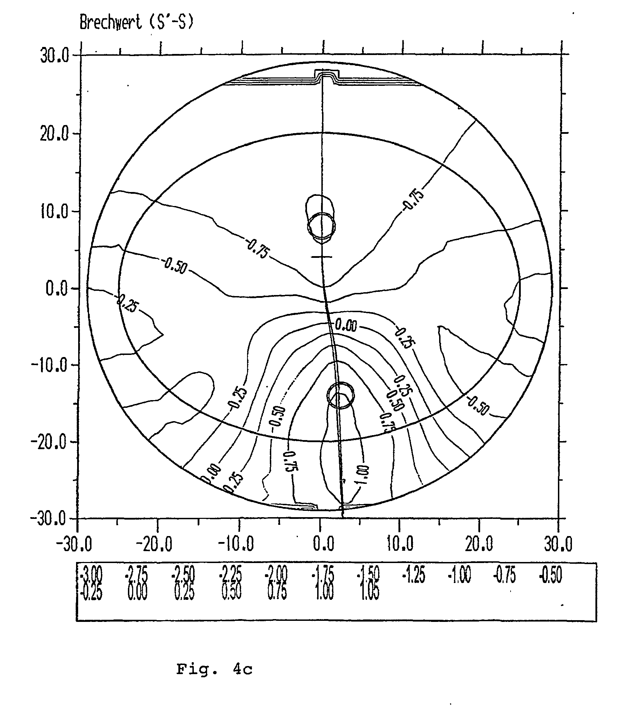

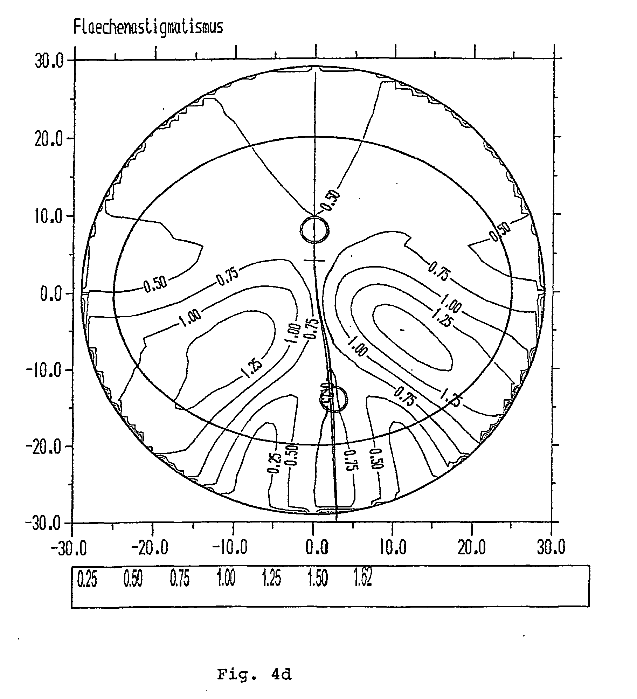

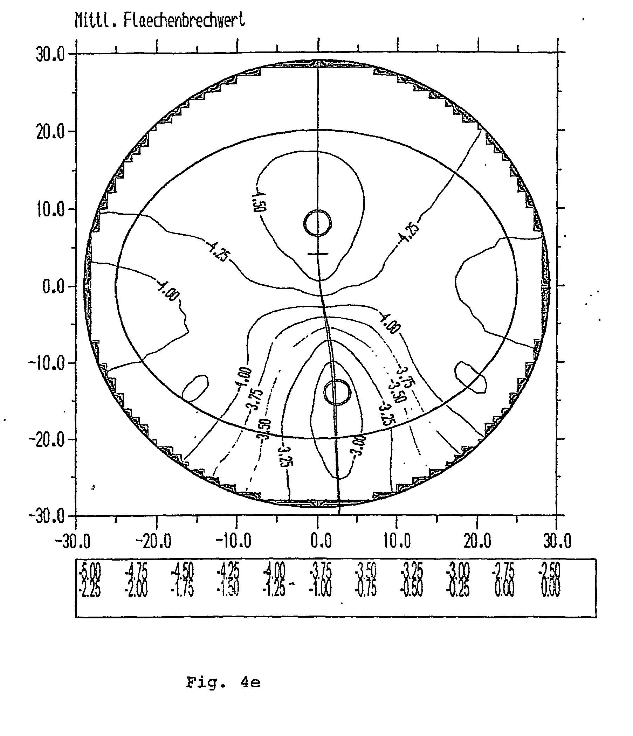

Bei allen vier dargestellten Ausführungsbeispielen ist die progressive Fläche ohne Beschränkung der Allgemeinheit die augenseitige Fläche. Bei der Vorderfläche handelt es sich um eine sphärische oder torische Fläche.
Allen vier Ausführungsbeispielen ist gemeinsam, daß sie im Fernbezugspunkt eine sphärische Wirkung (mittlerer Gebrauchswert) von -1 dpt und eine Addition von 2 dpt haben. Eine astigmatische Verordnung ist nicht vorhanden. In allen Figuren ist die Abszisse (x-Achse) die horizontale Achse und der Ordinate (y-Achse) die vertikale Achse in Gebrauchsstellung.
Der Fern- und der Nahbezugspunkt sind in den jeweiligen Figuren b-e jeweils mit Kreisen dargestellt, der Zentrierpunkt ist mit einem Kreuz bezeichnet - ihre Lage ist den jeweiligen Figuren zu entnehmen. Weiterhin ist der Verlauf der Hauptlinie, die erfindungsgemäß ermittelt worden ist, eingezeichnet.
Die Teilfiguren a geben die Pfeilhöhen der progressiven augenseitigen Fläche für die jeweiligen Ausführungsbeispiele an. Unter Pfeilhöhen versteht man den Abstand eines Punktes mit den Koordinaten x und y (horizontale bzw. vertikale Achse in der Gebrauchsstellung des Brillenglases) von der Tangentialebene des Flächenscheitels. In den Tabellen sind jeweils in der linken Spalte die $\gamma$-Werte (von -20 bis +20 mm) und in der obersten Zeile ab der Spalte 2 folgende die x-Werte (von -20 bis + 20mm) aufgetragen. Die Pfeilhöhen sind ebenfalls in Millimeter angeben. Der Wert 0 bedeutet, daß für diese x,y-Koordinaten keine Pfeilhöhe angegeben wird.
Die Teilfiguren b der Figuren 1 bis 4 zeigen die astigmatische Abweichung innerhalb eines Kreises mit dem Radius 30 mm um einen Punkt, der 4 mm unterhalb des sogenannten Zentrierkreuzes liegt. Die astigmatische Abweichung ist der "Rest-Astigmatismus" des Systems Brillenglas/Auge und ist mittels sogenannter Isolinien beginnend mit der Isolinie 0,25 dpt dargestellt. Die Isolinien geben die Abweichung des Astigmatismus bzgl. Betrag und Achslage von der zylindrischen Verordnung - im Falle eines astigmatismusfreien Auges 0 dpt - an.
Die Teilfiguren c zeigen entsprechend die Isolinien für den mittleren Gebrauchswert dieser Ausführungsbeispiele der Erfindung. Der mittlere Gebrauchswert D ist der Mittelwert der Kehrwerte der bildseitigen Schnittweiten S'1 und S'2 minus der Objektentfernung, also der objektseitigen Schnittweite S

$$D = 0,5 * (S'1 + S'2) - S$$

und ist ebenfalls in Form sogenannter Isolinien beginnend mit der Isolinie 0,75 dpt dargestellt.
Entsprechend sind in den Teilfiguren d und e die Isolinien der Flächendaten, nämlich der Flächenastigmatismus und der mittlere Flächenbrechwert dargestellt. Zur Definition dieser Flächendaten wird auf die einleitenden Ausführungen verwiesen.
Die vier Ausführungsbeispiele weisen folgende individualisierte Gebrauchsbedingungen auf:

| Beispiel | 1 | 2 | 3 | 4 |
|---|---|---|---|---|
| D1x | 4,55 | 4,55 | 3,41 | 3,41 |
| D1y | 4,55 | 4,55 | 3,41 | 3,98 |

Tabelle fortgesetzt

| Beispiel | 1 | 2 | 3 | 4 |
|---|---|---|---|---|
| n | 1,597 | 1,597 | 1,597 | 1,597 |
| d | 1,59 | 1,59 | 1,59 | 1,59 |
| DRP | 1,0 | 1,0 | 1,0 | 1,0 |
| PD | 63 | 71 | 63 | 63 |
| HSA | 15 | 15 | 10 | 10 |
| Vorneigung | 0 | 8 | 8 | 8 |

Hierbei bedeuten:

D1x   Brechwert der Vorderfläche in x-Richtung(dpt)
D1y   Brechwert der Vorderfläche in y-Richtung(dpt)
n   Brechungsindex des Glasmaterials
d   Mittendicke der Brillenlinse in mm
DRP   Dickenreduktionsprisma in cm/m
PD   Pupillenabstand in mm
HSA   Hornhaut/Scheitel-Abstand in mm

Vorneigungdes Brillenglases in Grad.

Trotz der individualisierten Gebrauchsbedingungen und des bei dem Beispiel 4 aus kosmetischen Gründen eingeführten Flächenastigmatismus der Vorderfläche unterscheiden sich die Isolinien in Gebrauchsstellung praktisch nicht, obwohl sich die Flächenwerte z.T. deutlich unterscheiden.

Selbstverständlich können die erfindungsgemäßen Verfahren auch auf die Berechnung und Herstellung von Brillengläsern mit zwei progressiven Flächen und/oder mit (zusätzlich) variierendem Brechungsindex übertragen werden.

Zur Ermittlung der individuellen Progressionslänge kann dabei insbesondere wie folgt vorgegangen werden:

Betrachtet werden sollen drei verschiedene Stellungen eines Brillenglases mit fester Progressionslänge vor dem Augendrehpunkt Z' entsprechend drei unterschiedlichen HSA.

Die Vorneigung der Fassungsebene beträgt bei dem Beispiel 0 Grad, der DIN-Abstand Augendrehpunkt-Apex der Hornhaut 13,5 mm.

$B_F$ bezeichnet den Fernbezugspunkt, $B_N$ bezeichnet den Nahbezugspunkt; die Progressionslänge L ist der Abstand zwischen $B_F$ und $B_N$ und ZK bezeichnet das Zentrierkreuz.

Bevorzugt wird die optimale, individuelle Progressionslänge nach folgendem Zusammenhang berechnet:

Der Blickwinkel $\alpha$ zwischen Nahbezugspunkt $B_N$ und Zentrierkreuz ZK für optimales Lesen im Nahbezugspunkt entspricht bei einer Progressionslänge von 22 mm und einem HSA von 15 mm etwa 32,3 Grad nach empirisch ermittelter Gebrauchsstellung.

$$\tan(32.3°) = \text{Abstand}\ (B_N, ZK)/(HSA + 13.5\ mm)$$

Dabei ist 13.5 mm der DIN-Abstand vom Augendrehpunkt zum Apex der Hornhaut. Dann gilt:

$$L_{opt} = 0.63 * (HSA + 13.5\ mm) + d\ (B_F, ZK).$$

Setzt man den gemessenen HSA einer vorangepaßten Fassung in obige Formel ein, ergibt sich die optimale individuelle Progressionslänge des Gleitsichtglases.
Bei einem Abstand von 4 mm zwischen ZK und $B_F$ ergibt sich für einen HSA von 20 mm eine optimale Progressionslänge von 18.8 mm. Dies zeigt wiederum die großen Abweichungen zu einer Standard-Progressionslänge von 22 mm.

Zusätzlich kann die Vorneigung der Fassungsebene und die Verordnung des Brillenglases (Sphäre, Zylinder, Achse, Prisma, Basis) mit berücksichtigt werden.

**Patentansprüche**

1. Verfahren zur Herstellung einer Brille, die individuelle progressive Brillengläser aufweist, mit folgenden Schritten:

    - Auswahl einer Brillenfassung,
    - Erfassen der Form der Gläserringe mit einer Genauigkeit in x- und y-Richtung von besser als $\pm 0,5$mm in einem Datensatz 1,
    - Erfassen der Durchstoßpunkte der Sehstrahlen durch die Ebene der Gläserringe für wenigstens zwei Auslege-Entfernungen der progressiven Brillengläser mit einer Genauigkeit von besser als $\pm 1$ mm in einem Datensatz 2,
    - Auswahl und Positionierung in Bezug auf die Gläserringe einer sphärischen oder asphärischen Fläche im Hinblick auf die Rezeptdaten und unter Verwendung der Datensätze 1 und 2 und Speichem der Daten in einem Datensatz 3,
    - Berechnung und Positionierung der progressiven Fläche relativ zu der ausgewählten Fläche unter Minimierung der kritischen Dicke des Brillenglases und unter Verwendung der Datensätze 1 bis 3 und Speichem der Daten in einem Datensatz 4,
    - Fertigung der progressiven Flächen sowie Randung der Brillengläser aus einem einseitig fertigen, nicht gerandeten Halbprodukt unter Verwendung der Datensätze 1 bis 4.

2. Verfahren nach Anspruch 1,
    **dadurch gekennzeichnet, daß** die sphärische oder asphärische Fläche die Vorderfläche ist.

3. Verfahren nach Anspruch 1 oder 2,
    **dadurch gekennzeichnet, daß** die Form der Gläserringe in z-Richtung mit einer Genauigkeit von besser $\pm 0,5$ mm für den Datensatz 1 erfaßt wird.

4. Verfahren nach einem der Ansprüche 1 bis 3,
    **dadurch gekennzeichnet, daß** in Verbindung mit der Erfassung der Durchstoßpunkte der Sehstrahlen durch die Ebene der Gläserringe die Anordnung der Gläserringe vor den Augen des Brillenträgers mit einer Genauigkeit in x-, y- und z-Richtung von besser als $\pm 0,5$mm in einem Datensatz 2' erfaßt wird.

5. Verfahren nach einem der Ansprüche 2 bis 4,
    **dadurch gekennzeichnet, daß** die Vorderfläche in Abhängigkeit von der Form der Gläserringe ausgewählt wird.

6. Verfähren nach Anspruch 4,
    **dadurch gekennzeichnet, daß** die Vorderfläche eine asphärische Fläche ist.

7. Verfahren nach Anspruch 5,
    **dadurch gekennzeichnet, daß** die Vorderfläche zwei unterschiedlich gestaltete Hauptschnitte aufweist, deren Gestaltung als Funktion der Form der Gläserringe gewählt ist.

8. Verfahren nach einem der Ansprüche 1 bis 7,
    **dadurch gekennzeichnet, daß** die progressive Fläche Bildfehler der zweiten Fläche kompensiert.

9. Verfahren nach einem der Ansprüche 1 bis 8,
    bei dem wenigstens eine progressive Fläche unter Berücksichtigung von individuellen Daten, wie dem Hornhaut/Scheitel-Abstandes etc., des Brillenträgers derart berechnet wird, daß in ausgezeichneten Punkten einer Hauptlinie und insbesondere dem sogenannten Fernbezugspunkt $B_F$ und dem Nahbezugspunkt $B_N$ das Brillenglas eine bestimmte, durch ein Brillenrezept vorgegebene Wirkung hat, **gekennzeichnet durch** die folgenden Schritte:

    - der individuelle Hornhaut/Scheitel-Abstand (HSA) bei einer vom Brillenträger ausgewählten, vorangepaßten Brillenfassung wird gemessen,
    - die für die vorangepaßte Brillenfassung optimale, individuelle Progressionslänge $L_{opt}$, d.h. der Abstand zwischen Fernbezugspunkt und Nahbezugspunkt in Richtung der Vertikalen im Gebrauchsstellung wird mittels des folgenden
    - Zusammenhangs ermittelt:

$$L_{opt} = \tan(32,3°\pm1°)*(HSA + 13.5 \text{ mm}) + d(B_F,ZK),$$

hierbei bedeuten:

HSA: Hornhaut/Scheitel-Abstand
$d(B_F, ZK)$ Abstand Fernbezugspunkt/Zentrierkreuz

- die progressive Fläche des Brillenglases wird derart berechnet, daß sich die ermittelte individuelle Progressionslänge $L_{opt}$ ergibt, und
- das Brillenglas wird entsprechend den berechneten Daten gefertigt.

**10.** Verfahren nach Anspruch 9,
**dadurch gekennzeichnet, daß** gilt:

$$3\text{mm} \leqslant d(B_F,ZK) \leqslant 5\text{mm}$$

und insbesondere

$$d(B_F,ZK) = 4\text{mm}.$$

**11.** Verfahren nach Anspruch 9 oder 10,
**dadurch gekennzeichnet, daß** zur Ermittlung des Wertes von $d(B_F, ZK)$ der individuelle Abstand d zwischen dem Fernbezugspunkt $B_F$ dem Durchstoßpunkt einer durch den Augendrehpunkt Z' verlaufenden und horizontal verlaufenden Geraden, der 0°-Blickrichtung, durch die Fassungsebene und einem Zentrierkreuz $Z_K$ ermittelt wird.

**12.** Verfahren nach einem der Ansprüche 9 bis 11,
**dadurch gekennzeichnet, daß** bei der Bestimmung des Wertes der optimalen, individuellen Progressionslänge $L_{opt}$ weitere individuelle Werte berücksichtigt werden.

**13.** Verfahren nach Anspruch 13,
**dadurch gekennzeichnet, daß** ein weiterer individueller Wert die Vorneigung der Fassungsebene ist.

**14.** Verfahren nach Anspruch 12 oder 13,
**dadurch gekennzeichnet, daß** weitere individuelle Werte die sphärische Wirkung, die Addition, die astigmatische Wirkung und Achslage sowie das Prisma und die Basis des Prismas sind.

**15.** Verfahren nach einem der Ansprüche 9 bis 14, **gekennzeichnet durch** folgende Zuordnung zwischen Hornhaut/Scheitelabstand HSA und der individuellen Progressionslänge $L_{opt}$:

| HSA | $L_{opt}$ |
|---|---|
| 10 mm | 18,8 mm |
| 15 mm | 22 mm |
| 20 mm | 25,1 mm. |

**16.** Verfahren nach einem der Ansprüche 9 bis 15,
**dadurch gekennzeichnet, daß** die Berechnung des Brillenglases und insbesondere der progressiven Fläche in Gebrauchsstellung erfolgt.

**Claims**

**1.** Method for the production of spectacles, which have individual progressive lenses, with the following steps:

• selection of a spectacle frame;

• determination of the shape of the lens rings with an accuracy in x- and y-direction of higher than ± 0.5 mm in a data record 1,

• determination of the pass points of the lines of sight through the plane of the lens rings for at least two design distances of the progressive lenses with an accuracy of higher than ± 1 mm in a data record 2,

• selection and positioning in relation to the lens rings of a spherical or aspherical surface on the basis of prescription data and using data records 1 and 2, and storage of the data in a data record 3,

• calculation and positioning of the progressive surface relative to the selected surface to minimise the critical thickness of the spectacle lens and using data records 1 to 3, and storage of the data in a data record 4,

• fabrication of the progressive surfaces as well as the edging of the spectacle lenses from a one-sided ready semi-finished product without edging using data records 1 to 4.

2. Method according to Claim 1, **characterised in that** the spherical or aspherical surface is the front surface.

3. Method according to Claim 1 or 2, **characterised in that** the shape of the lens rings is determined in z-direction with an accuracy of higher than ± 0.5 mm for the data record 1.

4. Method according to one of Claims 1 to 3, **characterised in that** in association with the determination of the pass points of the lines of sight through the plane of the lens rings, the arrangement of the lens rings in front of the eyes of the spectacle wearer is determined with an accuracy in the x-, y- and z-direction of higher than ± 0.5 mm in a data record 2'.

5. Method according to one of Claims 2 to 4, **characterised in that** the front surface is selected as a function of the shape of the lens rings.

6. Method according to Claim 4, **characterised in that** the front surface is an aspherical surface.

7. Method according to Claim 5, **characterised in that** the front surface has two differently configured principal planes, the configuration of which is selected as a function of the shape of the lens rings.

8. Method according to one of Claims 1 to 7, **characterised in that** the progressive surface compensates aberrations of the second surface.

9. Method according to one of Claims 1 to 8, in which at least one progressive surface is calculated taking into consideration individual data such as the corneal vertex distance etc. of the spectacle wearer in such a manner that in marked points of a principal line and in particular the so-called far reference point $B_F$ the near reference point $B_N$, the spectacle lens has a specific effect predetermined by the spectacle prescription, **characterised by** the following steps:

• the individual corneal vertex distance (CVD) is measured in the case of a previously fitted spectacle frame selected by the spectacle wearer,

• the optimum individual progression length $L_{opt}$ for the previously fitted spectacle frame, i.e. the distance between the far reference point and the near reference point in the direction of the vertical in the position of use, is determined by means of the following equation:

$$L_{opt} = \tan (32.3° \pm 1°) * (CVD + 13.5\ mm) + d(B_F, ZK),$$

wherein

CVD: corneal vertex distance

$d(B_F, ZK)$: far reference point/centring cross

• the progressive surface of the spectacle lens is calculated in such a way that the determined individual progression length $L_{opt}$ results, and

• the spectacle lens is fabricated in accordance with the calculated data.

**10.** Method according to Claim 9, **characterised in that** the following applies:

$$3 \text{ mm} \leq d(B_F, ZK) \leq 5 \text{ mm}$$

and in particular

$$d(B_F, ZK) = 4 \text{ mm}.$$

**11.** Method according to Claim 9 or 10, **characterised in that** for determination of the value of $d(B_F, ZK)$, the individual distance d between the far reference point $B_F$, the pass point of a horizontal straight line of 0° viewing direction running through the centre of rotation of the eye Z' through the frame plane and a centring cross $Z_k$ is determined.

**12.** Method according to one of Claims 9 to 11, **characterised in that** further individual values are taken into consideration in the determination of the value of the optimum individual progression length $L_{opt}$.

**13.** Method according to Claim 13 [12?], **characterised in that** a further individual value is the forward inclination of the frame plane.

**14.** Method according to Claim 12 or 13, **characterised in that** further individual values are the spherical effect, the addition, the astigmatic effect and axis position as well as the prism and the base of the prism.

**15.** Method according to one of Claims 9 to 14, **characterised by** the following correlation between the corneal vertex distance CVD and the individual progression length $L_{opt}$:

| CVD | $L_{opt}$ |
|---|---|
| 10 mm | 18.8 mm |
| 15 mm | 22 mm |
| 20 mm | 25.1 mm. |

**16.** Method according to one of Claims 9 to 15, **characterised in that** the calculation of the spectacle lens and in particular of the progressive surface is conducted in the position of use.

**Revendications**

**1.** Procédé pour fabriquer une paire de lunettes qui comporte des verres de lunettes individuels progressifs, comportant les étapes suivantes :

- choix d'une monture de lunettes,
- détermination de la forme des cercles de verre avec une précision dans les directions x et y supérieure à $\pm$ 0,5 mm et mise en mémoire des données dans un jeu de données 1,
- détermination des points de percée des rayons visuels par le plan des cercles de verre pour au moins deux distances de conception des verres de lunettes progressifs avec une précision supérieure à $\pm$ 1 mm et enregistrement des données dans un jeu de données 2,
- choix et positionnement par rapport aux cercles de verre d'une surface sphérique ou asphérique compte tenu des données d'ordonnance et en utilisant les jeux de données 1 et 2 et mise en mémoire des données dans un jeu de données 3,
- calcul et positionnement de la surface progressive relativement à la surface choisie en minimisant l'épaisseur critique du verre de lunettes et en utilisant les jeux de données 1 à 3 et mise en mémoire des données dans un jeu de données 4,
- fabrication des surfaces progressives ainsi que du bord des verres de lunettes à partir d'un semi-produit terminé d'un côté, non bordé, en utilisant les jeux de données 1 à 4,

**2.** Procédé selon la revendication 1, **caractérisé en ce que** la surface sphérique ou asphérique est la surface avant.

**3.** Procédé selon la revendication 1 ou 2, **caractérisé en ce que** la forme des cercles de verre dans la direction z est déterminée avec une précision supérieure à $\pm$ 0,5 mm pour le jeu de données 1.

**4.** Procédé selon l'une des revendications 1 à 3, **caractérisé en ce que**, en liaison avec la détermination des points de percée des rayons visuels par le plan des cercles de verre, la disposition des cercles de verre devant les yeux du porteur de lunettes est déterminée avec une précision supérieure à $\pm$ 0,5 mm dans les directions x, y, et z dans un jeu de données 2'.

**5.** Procédé selon l'une des revendications 2 à 4, **caractérisé en ce que** la surface avant est choisie en fonction de la forme des cercles de verre.

**6.** Procédé selon la revendication 4, **caractérisé en ce que** la surface avant est une surface asphérique.

**7.** Procédé selon la revendication 5, **caractérisé en ce que** la surface avant comporte deux sections principales formées différemment, dont la forme est choisie en fonction de la forme des cercles de verre.

**8.** Procédé selon l'une des revendications 1 à 7, **caractérisé en ce que** la surface progressive compense des défauts d'image de la deuxième surface.

**9.** Procédé selon l'une des revendications 1 à 8, dans lequel au moins une surface progressive est calculée en tenant compte de données individuelles, telles que la distance verre-oeil et autres du porteur de lunettes, de telle manière que, à des points marqués d'une ligne principale et en particulier au punctum remotum $B_F$ et au punctum proximum $B_N$, le verre de lunettes a un certain effet prédéterminé par une ordonnance de lunettes, **caractérisé par** les étapes suivantes :

- la distance verre-oeil individuelle (HSA) est mesurée pour une monture de lunettes préadaptée, choisie par le porteur de lunettes,
- la longueur de progression individuelle, optimale pour la monture de lunettes préadaptée $L_{opt}$, c'est-à-dire la distance entre punctum remotum et punctum proximum dans la direction de la verticale en position d'utilisation est déterminée au moyen du rapport suivant :

$$L_{opt} = \tan(32,3° \pm 1°) * (HSA + 13,5 \text{ mm}) + d(B_F, Z_K)$$

Dans cette formule:

HAS : distance verre-oeil
$d(B_F, Z_K)$ : distance punctum remotum / croix de centrage

- la surface progressive du verre de lunettes est calculée de manière à ce qu'il résulte la longueur de progression individuelle $L_{opt}$ obtenue, et
- le verre de lunettes est fabriqué conformément aux données calculées.

**10.** Procédé selon la revendication 9, **caractérisé en ce qu'**on a

$$3 \text{ mm} \leq d(B_F, Z_K) \leq 5 \text{ mm}$$

et en particulier

$$d(B_F, Z_K) = 4 \text{ mm}.$$

**11.** Procédé selon la revendication 9 ou la revendication 10, **caractérisé en ce que**, pour obtenir la valeur de d ($B_F$, $Z_K$), on calcule la distance individuelle d entre le punctum remotum $B_F$ le point de percée d'une droite passant par le point de rotation de l'oeil Z' et s'étendant horizontalement, la direction du regard 0°, par le plan de la monture et une croix de centrage $Z_K$.

**12.** Procédé selon l'une des revendications 9 à 11, **caractérisé en ce que**, lors de la détermination de la valeur de la longueur de progression individuelle optimale $L_{opt}$, d'autres valeurs individuelles sont prises en compte.

**13.** Procédé selon la revendication 13, **caractérisé en ce qu'**une autre valeur individuelle est la préinclinaison du plan de la monture.

**14.** Procédé selon la revendication 12 ou la revendication 13, **caractérisé en ce que** d'autres valeurs individuelles sont l'effet sphérique, l'addition, l'effet astigmatique et la position de l'axe, ainsi que le prisme et la base du prisme.

**15.** Procédé selon l'une des revendications 9 à 14, **caractérisé par** la correspondance suivante entre la distance verre-oeil HSA et la longueur de progression individuelle $L_{opt}$ :

| Distance verre-oeil | $L_{opt}$ |
|---|---|
| 10 mm | 18,8 mm |
| 15 mm | 22 mm |
| 20 mm | 25,1 mm |

**16.** Procédé selon l'une des revendications 9 à 15, **caractérisé en ce que** le calcul du verre de lunettes et en particulier de la surface progressive est effectué en position d'utilisation.

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,88114 |
| 17,5 | 0 | 0 | 0 | 0 | 0 | 1,727544 | 1,572749 | 1,478457 | 1,43887 |
| 15 | 0 | 0 | 0 | 1,628893 | 1,556258 | 1,343781 | 1,189465 | 1,093506 | 1,055960 |
| 12,5 | 0 | 0 | 1,827844 | 1,500623 | 1,231244 | 1,019591 | 0,885788 | 0,770078 | 0,732707 |
| 10 | 0 | 0 | 1,558189 | 1,232921 | 0,965089 | 0,754524 | 0,601373 | 0,505935 | 0,468849 |
| 7,5 | 0 | 1,728383 | 1,345574 | 1,022578 | 0,768795 | 0,547868 | 0,39678 | 0,300844 | 0,203872 |
| 5 | 0 | 1,566588 | 1,188478 | 0,868198 | 0,605063 | 0,396525 | 0,248337 | 0,154463 | 0,117566 |
| 2,5 | 0 | 1,459495 | 1,084527 | 0,767617 | 0,508048 | 0,305078 | 0,15802 | 0,066273 | 0,030092 |
| 0 | 1,833183 | 1,402774 | 1,031483 | 0,718728 | 0,463772 | 0,26568 | 0,123183 | 0,035027 | 0,00048 |
| -2,5 | 0 | 1,394458 | 1,027487 | 0,719736 | 0,470458 | 0,278427 | 0,141793 | 0,058484 | 0,028633 |
| -5 | 0 | 1,432945 | 1,070942 | 0,768662 | 0,525984 | 0,340808 | 0,210844 | 0,133162 | 0,105213 |
| -7,5 | 0 | 1,51707 | 1,160674 | 0,884715 | 0,628528 | 0,450405 | 0,32724 | 0,255205 | 0,230946 |
| -10 | 0 | 0 | 1,286365 | 1,00678 | 0,777293 | 0,605921 | 0,488963 | 0,42183 | 0,400599 |
| -12,5 | 0 | 0 | 1,478087 | 1,195879 | 0,972728 | 0,807223 | 0,685213 | 0,831598 | 0,61234 |
| -15 | 0 | 0 | 0 | 1,43296 | 1,214957 | 1,053701 | 0,944992 | 0,883608 | 0,86530 |
| -17,5 | 0 | 0 | 0 | 0 | 0 | 1,344445 | 1,237531 | 1,177299 | 1,159499 |
| -20 | 0 | 0 | 0 | 0 | 0 | 0 | 0 | 0 | 1,494989 |

| 0 | 2,5 | 5 | 7,6 | 10 | 12,5 | 15 | 17,6 | 20 |
|---|---|---|---|---|---|---|---|---|
| 20 | 0 | 0 | 0 | 0 | 0 | 0 | 0 | 0 |
| 17,5 | 1,459338 | 1,538288 | 1,675159 | 0 | 0 | 0 | 0 | 0 |
| 15 | 1,078827 | 1,155872 | 1,292618 | 1,4805 | 1,737084 | 0 | 0 | 0 |
| 12,5 | 0,753727 | 0,832805 | 0,969293 | 1,162491 | 1,41188 | 1,717203 | 0 | 0 |
| 10 | 0,489795 | 0,568789 | 0,704732 | 0,896843 | 1,144544 | 1,447722 | 0 | 0 |
| 7,5 | 0,28482 | 0,36345 | 0,498312 | 0,686819 | 0,933952 | 1,234434 | 1,690531 | 0 |
| 5 | 0,138583 | 0,216248 | 0,349128 | 0,536681 | 0,778744 | 1,075794 | 1,428451 | 0 |
| 2,5 | 0,050725 | 0,128539 | 0,258119 | 0,439446 | 0,677017 | 0,969832 | 1,318088 | 0 |
| 0 | 0,020498 | 0,093392 | 0,218221 | 0,395724 | 0,62728 | 0,914264 | 1,267804 | 1,650006 |
| -2,5 | 0,046199 | 0,115437 | 0,23443 | 0,404667 | 0,628679 | 0,908887 | 1,245883 | 0 |
| -5 | 0,124484 | 0,189993 | 0,302691 | 0,48531 | 0,680802 | 0,952683 | 1,282563 | 0 |
| -7,5 | 0,250899 | 0,313413 | 0,420938 | 0,576172 | 0,783244 | 1,046462 | 1,368183 | 0 |
| -10 | 0,421421 | 0,482323 | 0,585923 | 0,735457 | 0,935213 | 1,190203 | 0 | 0 |
| -12,5 | 0,833868 | 0,894298 | 0,785688 | 0,941459 | 1,135746 | 1,363841 | 0 | 0 |
| -15 | 0,887307 | 0,947892 | 1,048564 | 1,192212 | 1,38304 | 0 | 0 | 0 |
| -17,5 | 1,181572 | 1,242623 | 1,343387 | 0 | 0 | 0 | 0 | 0 |
| -20 | 0 | 0 | 0 | 0 | 0 | 0 | 0 | 0 |

Fig. 1a

Astigmatismus (Kom. Glas+Auge)

Fig. 1b

Fig. 1c

Flaechenastigmatismus

Fig. 1d

Fig. 1e

16

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,883159 |
| 17,5 | 0 | 0 | 0 | 0 | 0 | 1,713431 | 1,559597 | 1,463879 | 1,426279 |
| 15 | 0 | 0 | 0 | 1,814691 | 1,545607 | 1,334283 | 1,180808 | 1,085335 | 1,047946 |
| 12,5 | 0 | 0 | 1,817928 | 1,492398 | 1,224321 | 1,013638 | 0,860507 | 0,765194 | 0,727841 |
| 10 | 0 | 0 | 1,551597 | 1,22773 | 0,960937 | 0,751121 | 0,598481 | 0,503342 | 0,466141 |
| 7,5 | 0 | 1,720774 | 1,34152 | 1,019638 | 0,754625 | 0,548206 | 0,394455 | 0,2997 | 0,262583 |
| 5 | 0 | 1,563111 | 1,188309 | 0,866866 | 0,604259 | 0,397983 | 0,247914 | 0,154101 | 0,117244 |
| 2,5 | 0 | 1,457542 | 1,083694 | 0,78743 | 0,50814 | 0,305203 | 0,158065 | 0,066241 | 0,030034 |
| 0 | 1,830565 | 1,40174 | 1,031453 | 0,719197 | 0,464364 | 0,266129 | 0,123429 | 0,035094 | 0,000481 |
| -2,5 | 0 | 1,393847 | 1,027638 | 0,720335 | 0,471125 | 0,278936 | 0,142058 | 0,058561 | 0,026865 |
| -5 | 0 | 1,431506 | 1,070482 | 0,768893 | 0,526155 | 0,340932 | 0,210864 | 0,133127 | 0,105253 |
| -7,5 | 0 | 1,513988 | 1,158841 | 0,863288 | 0,627413 | 0,449478 | 0,326492 | 0,254673 | 0,230694 |
| -10 | 0 | 0 | 1,291739 | 1,002913 | 0,773978 | 0,603099 | 0,486693 | 0,420087 | 0,399381 |
| -12,5 | 0 | 0 | 1,470987 | 1,18868 | 0,96633 | 0,801624 | 0,690475 | 0,6277 | 0,809175 |
| -15 | 0 | 0 | 0 | 1,421637 | 1,204619 | 1,044387 | 0,938771 | 0,876431 | 0,859052 |
| -17,5 | 0 | 0 | 0 | 0 | 0 | 1,330393 | 1,224873 | 1,185587 | 1,148724 |
| -20 | 0 | 0 | 0 | 0 | 0 | 0 | 0 | 0 | 1,478348 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,446742 | 1,525089 | 1,660949 | 0 | 0 | 0 | 0 | 0 |
| 15 | 1,088824 | 1,14714 | 1,283004 | 1,475621 | 1,724487 | 0 | 0 | 0 |
| 12,5 | 0,748801 | 0,827434 | 0,96318 | 1,155306 | 1,403207 | 1,706598 | 0 | 0 |
| 10 | 0,487156 | 0,565798 | 0,701157 | 0,892405 | 1,138875 | 1,440352 | 0 | 0 |
| 7,5 | 0,283629 | 0,362012 | 0,496472 | 0,686141 | 0,930483 | 1,229496 | 1,583527 | 0 |
| 5 | 0,138174 | 0,215724 | 0,348404 | 0,535528 | 0,776835 | 1,072602 | 1,423349 | 0 |
| 2,5 | 0,050649 | 0,126498 | 0,256084 | 0,439204 | 0,676165 | 0,967619 | 1,314241 | 0 |
| 0 | 0,020553 | 0,09362 | 0,218612 | 0,396033 | 0,627053 | 0,912895 | 1,254395 | 1,652185 |
| -2,5 | 0,048367 | 0,115871 | 0,235083 | 0,405233 | 0,628653 | 0,907447 | 1,242688 | 0 |
| -5 | 0,124772 | 0,190572 | 0,303827 | 0,465825 | 0,680542 | 0,950999 | 1,278758 | 0 |
| -7,5 | 0,251041 | 0,313835 | 0,421376 | 0,576191 | 0,782252 | 1,043815 | 1,363169 | 0 |
| -10 | 0,420719 | 0,481895 | 0,565365 | 0,734297 | 0,932838 | 1,185937 | 0 | 0 |
| -12,5 | 0,631287 | 0,691979 | 0,793141 | 0,938177 | 1,13112 | 1,377177 | 0 | 0 |
| -15 | 0,881609 | 0,942421 | 1,04282 | 1,185658 | 1,376067 | 0 | 0 | 0 |
| -17,5 | 1,171396 | 1,232834 | 1,333105 | 0 | 0 | 0 | 0 | 0 |
| -20 | 0 | 0 | 0 | 0 | 0 | 0 | 0 | 0 |

Fig. 2a

EP 1 277 080 B1

Fig. 2b

Fig. 2c

Fig. 2d :

Fig. 2e

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,483192 |
| 17,5 | 0 | 0 | 0 | 0 | 0 | 1,351751 | 1,230516 | 1,154267 | 1,123188 |
| 15 | 0 | 0 | 0 | 1,432649 | 1,222377 | 1,056285 | 0,934816 | 0,858412 | 0,827363 |
| 12,5 | 0 | 0 | 1,435241 | 1,181539 | 0,971452 | 0,80533 | 0,683694 | 0,607109 | 0,576043 |
| 10 | 0 | 0 | 1,227201 | 0,974334 | 0,764837 | 0,599018 | 0,477446 | 0,400755 | 0,369618 |
| 7,5 | 0 | 1,35688 | 1,061981 | 0,810421 | 0,602142 | 0,437275 | 0,316257 | 0,239735 | 0,208596 |
| 5 | 0 | 1,231614 | 0,938551 | 0,688921 | 0,48261 | 0,318572 | 0,200009 | 0,124279 | 0,093338 |
| 2,5 | 0 | 1,145583 | 0,854972 | 0,608102 | 0,404841 | 0,24498 | 0,12822 | 0,054403 | 0,024064 |
| 0 | 1,428494 | 1,096785 | 0,809336 | 0,566173 | 0,367188 | 0,211947 | 0,099648 | 0,029303 | 0,000479 |
| -2,5 | 0 | 1,083532 | 0,800033 | 0,561595 | 0,368122 | 0,218933 | 0,112509 | 0,047001 | 0,020918 |
| -5 | 0 | 1,10447 | 0,825692 | 0,592805 | 0,405729 | 0,263502 | 0,163875 | 0,104027 | 0,081486 |
| -7,5 | 0 | 1,158712 | 0,885421 | 0,658853 | 0,478363 | 0,343326 | 0,25058 | 0,198349 | 0,177314 |
| -10 | 0 | 0 | 0,979146 | 0,758828 | 0,585318 | 0,457079 | 0,37049 | 0,320968 | 0,304702 |
| -12,5 | 0 | 0 | 1,108029 | 0,894145 | 0,726942 | 0,604462 | 0,522565 | 0,476302 | 0,46173 |
| -15 | 0 | 0 | 0 | 1,065304 | 0,90314 | 0,784706 | 0,705826 | 0,661476 | 0,647667 |
| -17,5 | 0 | 0 | 0 | 0 | 0 | 0,996895 | 0,919563 | 0,876091 | 0,862511 |
| -20 | 0 | 0 | 0 | 0 | 0 | 0 | 0 | 0 | 1,106712 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,137299 | 1,196414 | 1,300091 | 0 | 0 | 0 | 0 | 0 |
| 15 | 0,841728 | 0,901269 | 1,005406 | 1,153389 | 1,344503 | 0 | 0 | 0 |
| 12,5 | 0,590642 | 0,650549 | 0,754992 | 0,903076 | 1,09398 | 1,327145 | 0 | 0 |
| 10 | 0,384431 | 0,444568 | 0,549005 | 0,696743 | 0,886902 | 1,118987 | 0 | 0 |
| 7,5 | 0,223489 | 0,283546 | 0,3874 | 0,534022 | 0,722666 | 0,953043 | 1,22513 | 0 |
| 5 | 0,108139 | 0,187477 | 0,269782 | 0,414245 | 0,600403 | 0,828231 | 1,097849 | 0 |
| 2,5 | 0,038523 | 0,096156 | 0,195487 | 0,336256 | 0,518581 | 0,742766 | 1,009047 | 0 |
| 0 | 0,014248 | 0,068934 | 0,163658 | 0,298981 | 0,475882 | 0,69515 | 0,95711 | 1,261866 |
| -2,5 | 0,033792 | 0,084599 | 0,173402 | 0,301649 | 0,471495 | 0,684467 | 0,941018 | 0 |
| -5 | 0,093825 | 0,140525 | 0,222954 | 0,343364 | 0,505028 | 0,710451 | 0,960427 | 0 |
| -7,5 | 0,169843 | 0,233084 | 0,309789 | 0,42283 | 0,57821 | 0,773454 | 1,015905 | 0 |
| -10 | 0,317756 | 0,358953 | 0,431424 | 0,538505 | 0,684523 | 0,873797 | 0 | 0 |
| -12,5 | 0,475298 | 0,515786 | 0,585814 | 0,688904 | 0,829288 | 1,011708 | 0 | 0 |
| -15 | 0,661588 | 0,702177 | 0,771337 | 0,872168 | 1,008931 | 0 | 0 | 0 |
| -17,5 | 0,876573 | 0,917681 | 0,986887 | 0 | 0 | 0 | 0 | 0 |
| -20 | 0 | 0 | 0 | 0 | 0 | 0 | 0 | 0 |

Fig. 3a

Fig. 3b

Fig. 3c

24

Flaechenastigmatismus

Fig. 3d

Fig. 3e

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,859511 |
| 17,5 | 0 | 0 | 0 | 0 | 0 | 1,50138 | 1,379958 | 1,303651 | 1,272636 |
| 15 | 0 | 0 | 0 | 1,542449 | 1,331838 | 1,165525 | 1,043953 | 0,967654 | 0,936603 |
| 12,5 | 0 | 0 | 1,511323 | 1,257288 | 1,046964 | 0,880706 | 0,759034 | 0,682508 | 0,651567 |
| 10 | 0 | 0 | 1,275555 | 1,022451 | 0,812796 | 0,646908 | 0,525351 | 0,448765 | 0,417772 |
| 7,5 | 0 | 1,384017 | 1,088928 | 0,837204 | 0,628823 | 0,463931 | 0,342966 | 0,266564 | 0,235592 |
| 5 | 0 | 1,243534 | 0,950325 | 0,700575 | 0,49419 | 0,331146 | 0,211657 | 0,13807 | 0,105312 |
| 2,5 | 0 | 1,148451 | 0,857733 | 0,610758 | 0,407419 | 0,24752 | 0,130852 | 0,057195 | 0,027055 |
| 0 | 1,428472 | 1,096717 | 0,809173 | 0,565888 | 0,366782 | 0,211471 | 0,099215 | 0,029052 | 0,000481 |
| -2,5 | 0 | 1,086557 | 0,802938 | 0,564317 | 0,370641 | 0,221298 | 0,11488 | 0,049592 | 0,023886 |
| -5 | 0 | 1,116483 | 0,837507 | 0,604327 | 0,416932 | 0,274467 | 0,174837 | 0,115297 | 0,093357 |
| -7,5 | 0 | 1,185454 | 0,911829 | 0,684631 | 0,503912 | 0,388602 | 0,275938 | 0,222187 | 0,203995 |
| -10 | 0 | 0 | 1,025783 | 0,804908 | 0,63094 | 0,502494 | 0,416174 | 0,367378 | 0,352221 |
| -12,5 | 0 | 0 | 1,180632 | 0,966148 | 0,798566 | 0,676059 | 0,594688 | 0,549413 | 0,53619 |
| -15 | 0 | 0 | 0 | 1,169289 | 1,006916 | 0,888686 | 0,810566 | 0,787439 | 0,75515 |
| -17,5 | 0 | 0 | 0 | 0 | 0 | 1,139476 | 1,063086 | 1,021001 | 1,009067 |
| -20 | 0 | 0 | 0 | 0 | 0 | 0 | 0 | 0 | 1,298354 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,286928 | 1,346322 | 1,450381 | 0 | 0 | 0 | 0 | 0 |
| 15 | 0,951153 | 1,010952 | 1,115402 | 1,263729 | 1,455195 | 0 | 0 | 0 |
| 12,5 | 0,668353 | 0,728494 | 0,831205 | 0,979561 | 1,170717 | 1,404099 | 0 | 0 |
| 10 | 0,432788 | 0,49312 | 0,597781 | 0,745722 | 0,93804 | 1,168227 | 0 | 0 |
| 7,5 | 0,250671 | 0,310929 | 0,414968 | 0,561729 | 0,750443 | 0,980815 | 1,252824 | 0 |
| 5 | 0,120303 | 0,17983 | 0,282288 | 0,42683 | 0,612975 | 0,840898 | 1,110129 | 0 |
| 2,5 | 0,041724 | 0,099567 | 0,199042 | 0,33984 | 0,522071 | 0,746055 | 1,012047 | 0 |
| 0 | 0,014532 | 0,069517 | 0,164418 | 0,299733 | 0,476453 | 0,695415 | 0,956982 | 1,281273 |
| -2,5 | 0,037234 | 0,088517 | 0,177598 | 0,305833 | 0,475407 | 0,687952 | 0,94399 | 0 |
| -5 | 0,106518 | 0,153939 | 0,236827 | 0,357304 | 0,518642 | 0,723519 | 0,972842 | 0 |
| -7,5 | 0,217754 | 0,282028 | 0,339427 | 0,452722 | 0,605842 | 0,802481 | 1,044176 | 0 |
| -10 | 0,366784 | 0,409332 | 0,482737 | 0,590319 | 0,736259 | 0,924994 | 0 | 0 |
| -12,5 | 0,551412 | 0,593445 | 0,664619 | 0,768447 | 0,908998 | 1,091047 | 0 | 0 |
| -15 | 0,770786 | 0,813003 | 0,883481 | 0,985229 | 1,122374 | 0 | 0 | 0 |
| -17,5 | 1,024881 | 1,087625 | 1,138261 | 0 | 0 | 0 | 0 | 0 |
| -20 | 0 | 0 | 0 | 0 | 0 | 0 | 0 | 0 |

Fig. 4a

Astigmatismus (Kom. Glas+Auge)

Fig. 4b

Fig. 4c

Fig. 4d

Fig. 4e

31